Europäisches Patentamt

(19) European Patent Office

Office européen des brevets

(11) Veröffentlichungsnummer: **0 155 601**
**A2**

(12) **EUROPÄISCHE PATENTANMELDUNG**

(21) Anmeldenummer: **85102585.8**

(22) Anmeldetag: **07.03.85**

(51) Int. Cl.⁴: **G 11 B 33/04**
**G 11 B 23/02**

(30) Priorität: **22.03.84 DE 3410480**

(43) Veröffentlichungstag der Anmeldung:
**25.09.85 Patentblatt 85/39**

(84) Benannte Vertragsstaaten:
**BE CH FR GB LI NL**

(71) Anmelder: **Rudolf Wittner GmbH u. Co.**
**Bühlbergstrasse 6**
**D-7972 Isny(DE)**

(72) Erfinder: **Härle, Fritz**

**D-7972 Isny-Neutrauchburg(DE)**

(74) Vertreter: **Hoeger, Stellrecht & Partner**
**Uhlandstrasse 14c**
**D-7000 Stuttgart 1(DE)**

(54) **Quaderförmiger Behälter zum Aufbewahren quaderförmiger Schallplatten-, Tonband- oder Videobandkassetten.**

(57) Die Erfindung bezieht sich auf einen quaderförmigen Behälter zum Aufbewahren quaderförmiger Schallplatten- Tonband- oder Videokasseten mit jeweils gleicher Länge und Breite, jedoch zwei unterschiedlichen Höhen, wobei an der Behälterinnenwand in unterschiedlichen, der jeweiligen Kassettenhöhe entsprechenden Abständen Führungsleisten zum Einschieben der Kassetten angeordnet sind. Um Kassetten unterschiedlicher Höhe jeweils "leserichtig" in solche Behälter einlegen zu können, ist vorgesehen, daß der Behälter in Einschieberichtung der Kassetten die Querschnittsform eines Quadrates mit der Kassettenlänge oder Kassettenbreite entsprechender Quadratseite hat und in zwei Positionen so aufstellbar ist, daß die Kassetten unabhängig von ihrer Höhe in horizontaler oder vertikaler Lage einschiebbar sind.

Fig. 1

HOEGER, STELLRECHT & PARTNER

PATENTANWÄLTE

UHLANDSTRASSE 14 c · D 7000 STUTTGART 1

**0155601**

- 1 -

Anmelder: Rudolf Wittner GmbH u. Co.
Bühlbergstraße 6
7972 Isny

B e s c h r e i b u n g

Quaderförmiger Behälter zum Aufbewahren
quaderförmiger Schallplatten-, Tonband-
oder Videobandkassetten

Die Erfindung betrifft einen quaderförmigen Behälter zum
Aufbewahren quaderförmiger Schallplatten-, Tonband- oder
Videobandkassetten mit jeweils gleicher Länge und Breite,
jedoch zwei unterschiedlichen Höhen, wobei an der Behälterinnenwand in unterschiedlichen, der jeweiligen Kassettenhöhe entsprechenden Abständen Führungsleisten zum Einschieben der Kassetten angeordnet sind.

Die bekannten Behälter dieser Art, welche zumeist an
fünf ihrer insgesamt sechs Seiten geschlossen sind, und
bei welchen die offene Seite als Einschiebeöffnung für
die Kassetten dient, haben den Nachteil, daß sie - insbesondere in Zusammenordnung mit mehreren, gleichartigen
Behältern - nur in einer einzigen Position aufstellbar
sind. Da für Kassetten unterschiedlicher Höhe jeweils im Behälterinneren paarweise einander gegenüberliegende
Führungsleisten mit unterschiedlichen Abständen vorgesehen sind, führt dies dazu, daß Kassetten mit kleiner
Höhe nur in einer Lage, z.B. horizontal, einschiebbar
sind, während Kassetten mit größerer, zumeist doppelt so
großer Höhe wie die kleinen Kassetten, lediglich in
vertikaler Stellung eingeschoben werden können. Dies
wiederum führt zu dem Nachteil, daß eine am Kassettenrücken angeordnete, den Kasetteninhalt kennzeichnende
Beschriftung nur bei einer Kassettenart in richtiger
Leselage liegt.

Es ist Aufgabe der Erfindung, diesem Mangel abzuhelfen
und einen gattungsgemäßen Behälter derart zu verbessern,
daß Kassetten mit zwei unterschiedlichen Höhen leserichtig in den Behälter, und insbesondere in eine Zusammenordnung mehrerer Behälter eingelegt werden können.

Die Aufgabe wird erfindungsgemäß dadurch gelöst, daß
der Behälter in Einschieberichtung der Kassetten die
Querschnittsform eines Quadrates mit der Kassettenlänge
oder Kassettenbreite entsprechender Quadratseite hat
und in zwei Positionen so aufstellbar ist, daß die
Kassetten unabhängig von ihrer Dicke in horizontaler
oder vertikaler Lage einschiebbar sind.

Die nachstehende Beschreibung einer bevorzugten Ausführungsform der Erfindung dient im Zusammenhang mit
beiliegender Zeichnung der weiteren Erläuterung. Es
zeigen:

- 3 -

Fig. 1        eine schaubildliche Übereinander-
             anordnung zweier Behälter zum Auf-
             bewahren von Kassetten;

Fig. 2        eine Einzelansicht einer Kassettenfixierung;

Fig. 3        eine Schnittansicht entlang der
             Linie 3-3 in Fig. 1;

Fig. 4        eine vergrößerte Detailansicht der
             Seitenwände zweier nebeneinander
             angeordneter Kassetten;

Fig. 5        eine Seitenansicht einer Klammer
             zur Verbindung zweier Behälter
             und

Fig. 6        die Klammer aus Fig. 5 in Draufsicht.

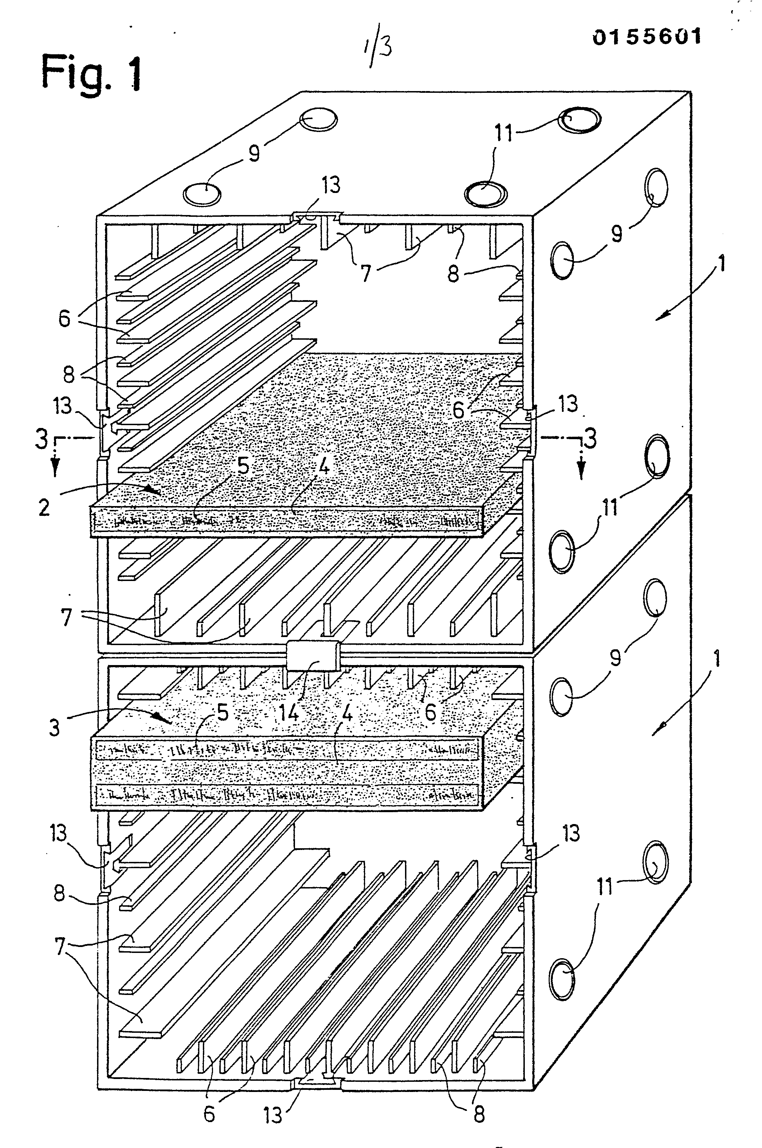

In Fig. 1 sind zwei aufeinandergestellte, identische,
quaderförmige Boxen oder Behälter zum Aufbewahren quaderförmiger Schallplatten-, Tonband, Videoband- oder
dergleichen Kassetten dargestellt. In den in Fig. 1
oberen Behälter 1 ist in Horizontallage eine Schallplattenkassette 2, eine sogenannte CD-Kassette 2 eingeschoben, während der in Fig. 1 unten liegende Behälter 1 eine CD-Kassette 3, ebenfalls in Horizontallage, enthält. Die Kassetten 2, 3 haben jeweils gleiche Länge
und Breite, jedoch unterschiedliche Höhe. Die verhältnismäßig dünne Kassette 2 dient der Aufnahme einer einzigen "Compact Disc", die Kassette 3 enthält zwei oder
drei solcher, für eine Laserabspielung geeignete Schallplatten. Jede Kassette 2, 3 weist einen Rücken 4 auf,
der eine auf den Kassetteninhalt hinweisende Beschriftung 5 trägt. Die Kassetten 2, 3 sind so in die Behälter 1 eingeschoben, daß die Beschriftung "leserichtig"
liegt.

Länge und Breite der Kassetten 2, 3 sind nur wenig verschieden und können beispielsweise etwa 14 bzw. 12,5 cm
betragen. Die Höhe der Kassette 2 beträgt etwa 1, diejenige der Kassette 3 etwa 2 cm.

Die Behälter 1 sind an fünf ihrer insgesamt sechs Seiten geschlossen und weisen jeweils eine in Fig. 1 vorne
liegende, offene Seite auf, die ein Einschieben der Kassetten 2, 3 gestattet. Die Behälter 1 sind ebenso wie
die Kassetten 2 quaderförmig ausgebildet, wobei jedoch
die in der Zeichnungsebene der Fig. 1 liegende Querschnittsform der Behälter 1 quadratisch ist. Die Quadratseite des Querschnitts entspricht bei der dargestellten
Ausführungsform der Kassettenlänge. Dementsprechend ist
die Tiefe der Behälter 1 etwa gleich der Kassettenbreite. Aufgrund der quadratischen Querschnittsform der
Behälter 1 ist natürlich auch die in Fig. 1 vorne liegende Einschiebeöffnung von quadratischer Gestalt.

- 5 -

Jeder Behälter 1 weist an seinen vier jeweils paarweise einander gegenüberliegenden Innenwänden Führungsleisten zum Einschieben der Kassetten auf. Es sind zwei
Arten von Führungsleisten vorgesehen, die sich durch
unterschiedliche gegenseitige Abstände auszeichnen,
wobei die Abstände jeweils den zwei unterschiedlichen
Höhen der Kassetten 2 bzw. 3 entsprechen. Die Führungsleisten mit kleinerem Abstand sind in Fig. 1 mit den
Bezugszeichen 6 versehen. Die Führungsleisten mit
größerem Abstand sind mit 7 bezeichnet. Die Führungsleisten mit kleinem bzw. großem Abstand sind jeweils
an einander gegenüberliegenden Seitenwänden der Behälter 1 angeordnet, so daß sie als Führungsschienen für
die eingeschobenen Behälter 2, 3 dienen. In Fig. 1
liegen die Führungsleisten 6 mit kleinerem Abstand im
oberen Behälter 1 an den links und rechts gelegenen
Seitenwänden, während die Führungsleisten 7 mit großem
Abstand an den oberen und unteren Seitenwänden liegen.
Der in Fig. 1 unten dargestellte Behälter 1 ist gegenüber dem oberen Behälter um 90° verdreht, so daß dort
die Führungsleisten 7 mit großem Abstand an den links
und rechts liegenden Seitenwänden liegen, während die
Führungsleisten 6 mit kleinem Abstand von den oberen
und unteren Seitenwänden abstehen. Hierdurch ist es
möglich, in den oberen Behälter 1 Kassetten 2 mit
kleiner und in den unteren Behälter 1 Kassetten 3 mit
großer Höhe einzuschieben, wobei in beiden Fällen die
Beschriftung 5 auf dem Rücken 4 beider Kassetten leserichtig angeordnet ist. Dies gilt bei der Ausführungsform gemäß Fig. 1 für eine Horizontalanordnung der Kassetten. Falls die Beschriftung auf dem Rücken der
Kassette in Vertikallage der Kassetten "leserichtig"
ist, können die Behälter 1 in Fig. 1 jeweils um 90°
verdreht und wieder aufeinandergestellt werden. Die
Kassetten können dann in Vertikalanordnung eingeschoben
werden.

Wie dargestellt, sind zwischen den Führungsleisten 6
und 7 jeweils parallel zu ihnen verlaufende Gleitstege
8 angeordnet, an denen die Schmalseiten der Kassetten
2, 3 beim Einschieben in die Behälter 1 entlanggleiten.
Hierdurch sind die Kassetten im Abstand von den Seitenwänden der Behälter gehalten,und es findet keine großflächige Reibungsberührung beim Einschieben und Herausziehen der Kassetten statt.

Da die Behälter 1 eine quadratische Querschnittsform,
eine quadratische Einschiebeöffnung für die Kassetten
2, 3 und jeweils die gleiche Tiefe haben, können sie
in beliebiger Zahl und Anordnung neben- und übereinander
gestellt werden, und zwar immer so, daß die Kassetten
2, 3 mit unterschiedlicher Höhe jeweils mit ihrem Rücken
"leserichtig" eingeschoben werden können, wobei gegebenenfalls ein Teil der Behälter die Kassetten in Horizontallage aufnimmt, während im restlichen Teil der
Behälter die Kassetten vertikal stehen, wenn dies die
Beschriftung auf dem Kassettenrücken erforderlich macht.

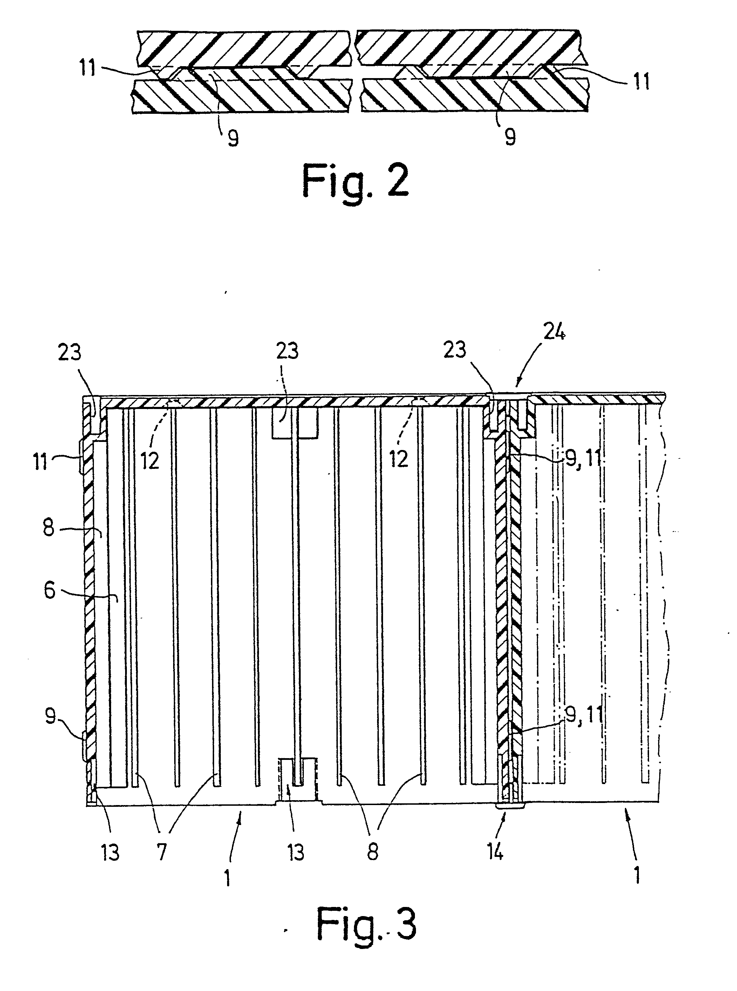

Um die Behälter 1 rutschfest auf- oder nebeinander
stellen zu können, sind die Außenflächen der vier Seitenwände der Behälter in der aus Fig. 1 ersichtlichen Weise mit zueinander komplementären, ineinander
eingreifenden Strukturelementen versehen, die einen
Formschluß jeweils zweier neben und/oder übereinander
stehender Behälter in deren beiden Aufstellpositionen
gemäß Fig. 1 ermöglichen. Bei der dargestellten Ausführungsform sind diese Strukturelemente als scheiben-
bzw. ringförmige Vorsprünge verschiedenen Durchmessers
ausgebildet. Jede Behälterseite weist in der aus Fig. 1
ersichtlichen Anordnung zwei scheibenförmige Vorsprünge
9 kleinen Durchmessers und zwei ringförmige Vorsprünge
11 größeren Durchmessers auf, wobei die Außendurchmesser
der Vorsprünge 9 im wesentlichen gleich den Innendurchmessern der Vorsprünge 11 sind, so daß die Vorsprünge
komplementär ineinandergreifen können, wie dies Fig. 2
zeigt. Wie aus dieser Figur hervorgeht, ergibt sich
beim Über- oder Nebeneinanderstellen der Behälter 1 auf
diese Weise zwischen deren Außenwänden ein geringfügiger Zwischenraum. Um diesen Zwischenraum zu vermeiden,
können die ringförmigen Vorsprünge 11 auch als Vertiefungen mit entsprechendem Durchmesser ausgebildet werden, in den dann die scheibenförmigen Vertiefungen 9
formschlüssig eingreifen.

Auch andere zueinander komplementäre, ineinander eingreifende Strukturelemente an den Außenseiten der Behälter 1 können Anwendung finden, beispielsweise in
schwalbenschwanzförmiger oder sägezahnförmiger Gestalt.

Die Behälteranordnung gemäß Fig. 1 kann auf einer horizontalen Abstellfläche, beispielsweise einem Tisch oder einem Regalbrett, aufgestellt werden. Die Anordnung kann aber auch direkt an einer Wand befestigt
werden. Hierzu sind an den Rückwänden der Behälter 1
Löcher 12 vorgesehen, die ein Anschrauben der Behälter
an einer Wand gestatten. Die Behälter 1 sind bei der
bevorzugten Ausführungsform aus Kunststoff gespritzt
oder gegossen. In diesem Falle bleiben die Löcher 12
beim Spritzen oder Gießen mit einer dünnen Kunststoffhaut überzogen, die erst bei Bedarf durchstoßen wird.
Die Behälter 1 können im übrigen auch nebeneinander
mit nach oben gerichteter Einschiebeöffnung, z.B. in
einer Schublade, angeordnet werden, und auch dort gegebenenfalls mit Hilfe der Löcher 12 verschraubt werden.

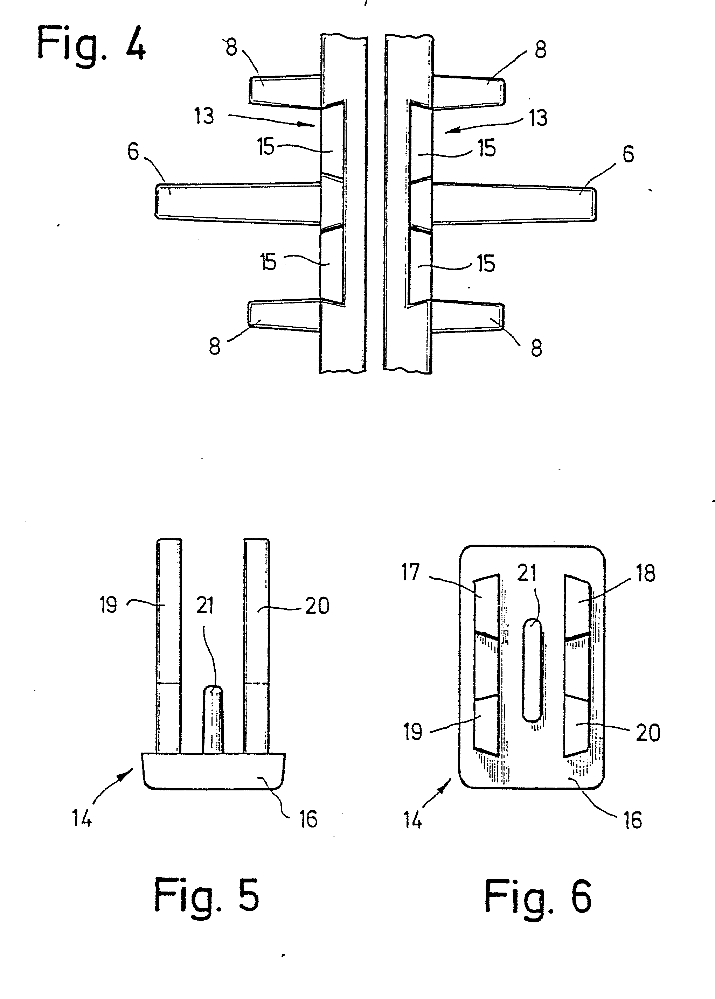

Bei der bevorzugten Ausführungsform der Erfindung weisen die Behälter 1 an ihren Seitenwänden Einstecköffnungen 13 für Klammern 14 auf, wobei die Klammern
der gegenseitigen Verbindung jeweils zweier Behälter
dienen. Wie aus Fig. 1 hervorgeht, sind an der Vorderseite jedes Behälters jeweils vier Einstecköffnungen
13 vorgesehen. In die beiden in der Mitte der Fig. 1
einander benachbarten Einstecköffnungen ist eine Klammer 14 eingesteckt. Wie aus Fig. 4 hervorgeht, weisen
die Einstecköffnungen jeweils zwei Schwalbenschwanzführungen 15 auf, in welche komplementäre Schenkel der
Klammer 14 einführbar sind. Die Klammer 14 selbst ist
in Fig. 5 und 6 dargestellt. Sie weist an einer Trägerplatte 16 insgesamt vier abstehende Stege 17,18,19,20
mit schwalbenschwanzförmigem Querschnitt auf. Zwischen
den Stegen ist ein kurzer Zapfen 21 an der Platte 16 vorgesehen, der den Abstand zwischen den Seitenwänden
zweier benachbarter Behälter 1 bestimmt. Die Fig. 4
zeigt zwei nebeneinander liegende Behälteröffnungen
mit insgesamt vier Schwalbenschwanzführungen 15, in
welche die schwalbenschwanzförmigen Stege 17,18,19,20
eingeschoben werden. Auf diese Weise können zwei neben-
oder übereinander liegende Behälter 1 im Verein mit
den                        Vorsprüngen 9,11 fest und formschlüssig miteinander verbunden werden. Die zueinander komplementären Strukturelemente, beispielsweise in Gestalt
der Vorsprünge 9,11 können entfallen, wenn die Einstecköffnungen 13 und die Klammern 14, z.B. unter Erzielung
einer Schnappwirkung, so ausgebildet werden, daß durch
sie ein ausreichender, rutschfester Formschluß zwischen
zwei neben- oder übereinander angeordneten Behältern 1
gewährleistet ist.

Die Tiefe der Behälter 1 wird vorzugsweise etwas geringer
als die sich in dieser Richtung erstreckende Dimension
der Kassetten ausgebildet, so daß die Kassetten mit
ihren Rücken 4 etwas über die Öffnung der Behälter 1
vorstehen. Da die Kassetten 2, 3 weiterhin aufgrund
der Gleitstege 8 etwas im Abstand von den Innenwänden
der Behälter 1 gehalten sind, können die Kassetten im
Bereich ihres Rückens auf diese Weise leicht erfasst
und aus den Behältern 1 entnommen werden.

Der wesentliche Vorteil der beschriebenen Behälter besteht darin, daß sie eine quadratische Einschiebeöffnung für die Kassetten haben. Somit können die Behälter in
zwei Positionen angeordnet und lückenlos neben- oder
übereinander gestellt und miteinander verbunden werden.

Die beschriebenen Klammern 14 werden an der Vorderseite der Behälter 1 angebracht. Zur weiteren Verbesserung
der gegenseitigen Verbindung mehrerer Behälter 1 können
auch an ihren Rückwänden entsprechende Einstecköffnungen
23 angeordnet werden, in welche Klammern 24 einsteckbar sind (vgl. Fig. 3). Die Einstecköffnungen 23 und
die Klammern 24 können ähnlich wie die Einstecköffnungen
13 und die Klammern 14 ausgebildet werden.

HOEGER, STELLRECHT & PARTNER **0155601**

PATENTANWÄLTE

UHLANDSTRASSE 14 c · D 7000 STUTTGART 1

Anmelder: Rudolf Wittner GmbH u. Co.
Bühlbergstraße 6
7972 Isny

- 1 -


Patentansprüche


1. Quaderförmiger Behälter zum Aufbewahren quaderförmiger Schallplatten-, Tonband- oder Videobandkassetten mit jeweils gleicher Länge und Breite, jedoch zwei unterschiedlichen Höhen, wobei an der
Behälterinnenwand in unterschiedlichen, der jeweiligen Kassettenhöhe entsprechenden Abständen Führungsleisten zum Einschieben der Kassetten angeordnet sind,
d a d u r c h   g e k e n n z e i c h n e t,
daß der Behälter (1) in Einschieberichtung der
Kassetten (2,3) die Querschnittsform eines Quadrates mit der Kassettenlänge oder Kassettenbreite
entsprechender Quadratseite hat und in zwei Positionen so aufstellbar ist, daß die Kassetten (2,3)
unabhängig von ihrer Höhe in horizontaler oder
vertikaler Lage einschiebbar sind.


2. Behälter nach Anspruch 1, dadurch gekennzeichnet,
daß sie im wesentlichen ohne Zwischenräume neben-
und übereinander stellbar sind.


3. Behälter nach Anspruch 1 oder 2, dadurch gekennzeichnet, daß Klammern (14) zum gegenseitigen Verbinden neben- und/oder übereinander angeordneter
Behälter vorgesehen sind.

0155601

- 2 -

4. Behälter nach Anspruch 3, dadurch gekennzeichnet,
daß die Klammern (14) formschlüssig in die Behälterwände eingreifen.

5. Behälter nach Anspruch 3 oder 4, dadurch gekennzeichnet, daß die Klammern (14) schwalbenschwanzförmigen Querschnitt haben.

6. Behälter nach einem der Ansprüche 1 bis 5, dadurch
gekennzeichnet, daß an ihrer Außenseite zueinander
komplementäre, ineinander eingreifende Strukturelemente (9,11) vorgesehen sind, die einen rutschfesten Formschluß zweier neben- und/oder übereinander
angeordneter Behälter in deren beiden Aufstellpositionen ermöglichen.

7. Behälter nach Anspruch 6, dadurch gekennzeichnet,
daß die Strukturelemente als ringförmige Vorsprünge
(9,11) verschiedenen Durchmessers ausgebildet sind.

8. Behälter nach Anspruch 6, dadurch gekennzeichnet,
daß die Strukturelemente schwalbenschwanz- oder
sägezahnförmig sind.

# Fig. 1

0155601

Fig. 2

Fig. 3

A 46 056 m

Fig. 4

Fig. 5

Fig. 6